# EUROPÄISCHE PATENTANMELDUNG

(11) **EP 1 529 792 A1**
(43) Veröffentlichungstag der Anmeldung: **11.05.2005**
(21) Anmeldenummer: 04024707.4
(22) Anmeldetag: 16.10.2004
(51) Int. Cl.: C08G 18/76, C08G 18/10, C08G 18/48

(54) **Verfahren zur Herstellung von Polyurethan-Weichschaumstoffen**

(30) Priorität: 10.11.2003 DE 10352876
(71) Anmelder: BASF AKTIENGESELLSCHAFT, 67056 Ludwigshafen (DE)
(72) Erfinder: Klopsch, Rainer Dr., 49448 Lemförde (DE)

(57) **Zusammenfassung**

Gegenstand der Erfindung ist ein Verfahren zur Herstellung von Polyurethan-Weichschaumstoffen mit einer Dichte im Bereich zwischen 30 bis 80 g/L durch Umsetzung von
a) Polyisocyanaten mit
b) Verbindungen mit mindestens zwei mit Isocyanatgruppen reaktiven Wasserstoffatomen in Gegenwart von
c) Treibmitteln,
wobei als Polyisocyanate a) Prepolymere mit einem NCO-Gehalt von maximal 17,5 Gew.-% eingesetzt werden, deren Herstellung die Schritte
i) Umsetzung von 4,4'-MDI mit mindestens einem Polyetheralkohol mit einer Hydroxylzahl im Bereich zwischen 20 und 60 mgKOH/g und einem Anteil von Ethylenoxideinheiten in der Polyetherkette von 10 bis 20 Gew.-%, bezogen auf das Gewicht der eingesetzten Alkylenoxide zu einem Prepolymeren mit einem NCO-Gehalt im Bereich zwischen 10 und 14 Gew.-%,
ii) Mischung des Prepolymeren aus Schritt i) mit Polyphenylen-polymethylen-polyisocyanaten,
umfasst.

## Beschreibung

Die Erfindung betrifft ein Verfahren zur Herstellung von Polyurethan-Weichschaumstoffen.

Polyurethan-Weichschaumstoffe sind seit langem bekannt und vielfach beschrieben. Ihre Herstellung erfolgt zumeist durch Umsetzung von Polyisocyanaten mit Verbindungen mit mindestens zwei mit Isocyanatgruppen reaktiven Wasserstoffatomen. Häufig wird als Isocyanat Diphenylmethandiisocyanat (MDI) verwendet. Da MDI bei Raumtemperatur fest ist, wird es üblicherweise mit einem Unterschuss an Polyol zu einem Prepolymer mit freien Isocyanatgruppen umgesetzt und in dieser Form verarbeitet.

Aus dem Stand der Technik ist eine Vielzahl von Isocyanatgruppen enthaltenden Prepolymeren bekannt. So beschreibt DE 42 03 918 ein Verfahren zur Herstellung von Polyurethan-Weichschaumstoffen durch Umsetzung von Isocyanatgruppen enthaltenden Prepolymeren mit einem NCO-Gehalt im Bereich zwischen 20 und 30 Gew.-%, die entweder durch Umsetzung einer Mischung aus Diphenylmethan-Diisocyanaten und Polyphenylen-polymethylen-polyisocyanaten mit einer Polyolkomponente oder durch Verdünnung eines Prepolymeren mit einem NCO-Gehalt im Bereich zwischen 10 und 19 Gew.-%, welches durch Umsetzung von Diphenylmethan-Diisocyanaten mit einer Polyolkomponente hergestellt wurde, mit Polyolen erhalten werden.

Es hat sich gezeigt, dass der Gehalt von 4,4'-MDI in einem Polyurethan-Weichschaumstoff sehr stark dessen Härte bestimmt. Bei konstantem Wassergehalt und bei konstanter Dichte nimmt die Härte eines Weichschaums zu, wenn man den Gehalt an 4,4'-MDI in der Isocyanatkomponente erhöht. Geht man zu sehr hohen Gehalten an 4,4' MDI über, so erhält man Schäume, die entweder spröde und rissig sind oder bei der Herstellung kollabieren. Letzteres ist das Resultat der hohen Aggregationsneigung von Harnstoffen auf Basis von 4,4'-MDI, die eine verfrühte Zellöffnung einleiten.

Es hat sich gezeigt, dass die Offenzelligkeit vieler Schaumstoffe, die wesentlich für die Gebrauchseigenschaften der Schäume verantwortlich ist, häufig unzureichend ist.

Außerdem hat sich gezeigt, dass die Entformzeit von Schaumstoffen mit einem niedrigen Gehalt an 4,4'-MDI für viele technische Einsatzgebiete zu hoch ist.

Somit war es die Aufgabe der vorliegenden Erfindung, ein Verfahren zur Herstellung von Polyurethan-Weichschaumstoffen mit einer Dichte im Bereich zwischen 30 bis 80 g/l und einer Härte im Bereich zwischen 4 bis7 kPa bei einer Dichte 30 bis 50 g/L und 8 bis 10 kPa bei einer Dichte 50 bis 80 g/l zu entwickeln, die sich durch eine kurze Entformzeit auszeichnen, ohne dass es zu einer Verschlechterung der übrigen mechanischen Eigenschaften kommt.

Es wurde überraschenderweise gefunden, dass bei der Verwendung von Prepolymeren mit einem NCO-Gehalt von maximal 17,5 Gew.-%, die in einem ersten Schritt durch Umsetzung von 4,4'-MDI mit Polyetheralkoholen mit einer Hydroxylzahl im Bereich zwischen 25 -40 mg KOH/g und einem Gehalt an Ethylenoxid im Bereich zwischen 10 und 20 Gew.-%, bezogen auf das Gewicht der eingesetzten Alkylenoxide, zu einem Prepolymeren mit einem NCO-Gehalt im Bereich zwischen 10 und 14 Gew.-% umgesetzt und in einem zweiten Schritt mit Polyphenylen-polymethylen-polyisocyanaten bis zu einem NCO-Gehalt von maximal 17,5 Gew.-%, vorzugsweise maximal 15 Gew.-%, vermischt werden, Schaumstoffe mit einer hohen Offenzelligkeit und kurzen Entformzeiten erhalten werden können, ohne dass es zu einer Verschlechterung der mechanischen Eigenschaften kommt.

Gegenstand der Erfindung ist demzufolge ein Verfahren zur Herstellung von Polyurethan-Weichschaumstoffen mit einer Dichte im Bereich zwischen 40 bis 70 g/l durch Umsetzung von
a) Polyisocyanaten mit
b) Verbindungen mit mindestens zwei mit Isocyanatgruppen reaktiven Wasserstoffatomen in Gegenwart von
c) Treibmitteln,
dadurch gekennzeichnet, dass als Polyisocyanate a) Prepolymere mit einem NCO-Gehalt von maximal 17,5 Gew.-%, vorzugsweise maximal 15 Gew.-%, eingesetzt werden, deren Herstellung die Schritte
i) Umsetzung von 4,4'-MDI mit mindestens einem Polyetheralkohol mit einer Hydroxylzahl im Bereich zwischen 20 und 60 mgKOH/g und einem Anteil von Ethylenoxideinheiten in der Polyetherkette von 10 bis 20 Gew.-%, bezogen auf das Gewicht der eingesetzten Alkylenoxide, zu einem Prepolymeren mit einem NCO-Gehalt im Bereich zwischen 10 und 14 Gew.-%,
ii) Mischung des Prepolymeren aus Schritt i) mit Polyphenylen-polymethylen-polyisocyanaten,
umfasst.

Gegenstand der Erfindung sind weiterhin Polyurethan-Weichschaumstoffe mit einer Dichte im Bereich zwischen 40 bis 70 g/l, herstellbar nach dem erfindungsgemäßen Verfahren.

Bevorzugt wird zur Herstellung der Prepolymere in Schritt i) reines 4,4'-MDI ohne Beimischung anderer Isocyanate eingesetzt. Das 4,4'-MDI kann jedoch auch maximal 5 Gew.-% andere Diphenylmethandiisocyanat-Isomere, insbesondere 2,4'-MDI, enthalten.

Der in Schritt i) eingesetzte Polyetheralkohol wird üblicherweise durch Umsetzung von H-funktionellen Startsubstanzen mit Alkylenoxiden hergestellt. Als H-funktionelle Startsubstanzen werden vorzugsweise zwei- bis dreifunktionelle Alkohole eingesetzt. Besonders bevorzugt werden als Startsubstanzen Glyzerin und/oder Trimethylolpropan eingesetzt. Vorzugsweise weisen die Polyetheralkohole eine Hydroxylzahl im Bereich zwischen 20 und 60 mgKOH/g, insbesondere zwischen 25 und 50 mgKOH/g auf. In einer bevorzugten Ausführungsform des erfindungsgemäßen Verfahrens weisen die eingesetzten Polyetheralkohole am Kettenende einen reinen Ethylenoxidblock auf, der vorzugsweise einen Gehalt von 10 bis 20, vorzugsweise 10 bis 15 Gew.-%, bezogen auf die Menge des eingesetzten Alkylenoxids, aufweist.

Das in Schritt ii) zugesetzte Polyphenylen-polymethylen-polyisocyanat liegt üblicherweise im Gemisch mit Isomeren des Diphenylmethandüsocyantes vor. Zumeist enthält polymeres MDI etwa 37,2% 4,4'MDI und 2,6% 2,4'MDI. Die eingesetzten Polyphenylen-polymethylen-polyisocyanate haben vorzugsweise einen NCO-Gehalt im Bereich zwischen 30,5 Gew.-% und 32,0 Gew.-%.

Durch den Zusatz des Polyphenylen-polymethylen-polyisocyanats in Schritt ii) wird der NCO-Gehalt des Prepolymeren aus Schritt i) vorzugsweise um maximal 4 Gew.-% erhöht. Die Menge des zugesetzten Polyphenylen-polymethylen-polyisocyanats ist dabei so zu bemessen, dass das Endprodukt aus Schritt ii) einen NCO-Gehalt von maximal 17,5 Gew.-%, vorzugsweise 15 Gew.-%, aufweist.

Das Gewichtsverhältnis von 4,4'-MDI zu Polyphenylen-polymethylen-polyisocyanat beträgt im Prepolymer vorzugsweise zwischen 1 und 10, insbesondere 2 bis 3.

Dieses Prepolymer wird zur Herstellung der Weichschaumstoffe in Anwesenheit von Treibmitteln c), Katalysatoren, sowie gegebenenfalls üblichen Hilfs- und/oder Zusatzstoffen mit b) Verbindungen mit mindestens zwei mit Isocyanatgruppen reaktiven Wasserstoffatomen umgesetzt.

Als Verbindungen mit mindestens zwei mit Isocyanatgruppen reaktiven Wasserstoffatomen b) kommen die zur Herstellung von Polyurethan-Weichschaumstoffen üblichen und bekannten Verbindungen zum Einsatz.

Als Verbindung mit mindestens zwei aktiven Wasserstoffatomen b) kommen insbesondere Polyesteralkohole und/oder vorzugsweise Polyetheralkohole mit einer Funktionalität von 2 bis 8, insbesondere von 2 bis 6, vorzugsweise von 2 bis 4 und einem mittleren Equivalentmolekulargewicht im Bereich von 400 bis 3000 g/mol, vorzugsweise 1000 bis 2500 g/mol, in Betracht.

Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren auch Multimetallcyanidverbindungen, sogenannte DMC-Katalysatoren, eingesetzt werden. Es ist möglich, auch den zur Herstellung des Prepolymeren eingesetzten Polyetheralkohol in der Komponente b) einzusetzen.

Für bestimmte Einsatzgebiete, insbesondere zur Erhöhung der Härte der Polyurethan-Weichschaumstoffe, können auch sogenannte polymermodifizierte Polyole verwendet werden. Derartige Polyole können beispielsweise durch in-situ Polymerisation von ethylenisch ungesättigten Monomeren, vorzugsweise Styrol und/oder Acrylnitril, in Polyetheralkoholen hergestellt werden. Zu den polymermodifizierten Polyetheralkoholen gehören auch Polyharnstoffdispersionen enthaltende Polyetheralkohole, die vorzugsweise durch Umsetzung von Aminen mit Isocyanaten in Polyolen hergestellt werden.

Zur Herstellung von Weichschäumen und Integralschäumen werden insbesondere zwei- und/oder dreifunktionelle Polyetheralkohole eingesetzt.

Bevorzugt werden zur Herstellung von Weichschaumstoffen nach dem erfindungsgemäßen Verfahren zwei- und/oder dreifunktionelle Polyetheralkohole eingesetzt, die primäre Hydroxylgruppen aufweisen, insbesondere solche mit einem Ethylenoxidblock am Kettenende oder solche, die nur auf Ethylenoxid basieren.

Geeignete Polyesterpolyole können beispielsweise aus organischen Dicarbonsäuren mit 2 bis 12 Kohlenstoffatomen, vorzugsweise aliphatischen Dicarbonsäuren mit 8 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und die isomeren Naphthalindicarbonsäuren. Vorzugsweise wird Adipinsäure eingesetzt. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden.

Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure und Hydroxybenzoesäuren. Vorzugsweise eingesetzt wird Dipropylenglykol.

Die Hydroxylzahl der Polyesteralkohole (b2) liegt vorzugsweise im Bereich zwischen 40 und 100 mgKOH/g.

Zu den Verbindungen mit mindestens zwei aktiven Wasserstoffatomen gehören auch die Kettenverlängerungs- und Vernetzungsmittel, die gegebenenfalls mitverwendet werden können. Als Kettenverlängerungs- und Vernetzungsmittel werden vorzugsweise 2- und 3-funktionelle Alkohole mit Molekulargewichten unter 400 g/mol, insbesondere im Bereich von 60 bis 150 g/mol, verwendet. Beispiele sind Ethylenglykol, Propylenglykol, Diethylenglykol, Butandiol-1,4, Glycerin oder Trimethylolpropan. Als Vernetzungsmittel können auch Diamine eingesetzt werden. Falls Kettenverlängerungs- und Vernetzungsmittel eingesetzt werden, beträgt deren Menge vorzugsweise bis zu 5 Gew.-%, bezogen auf das Gewicht der Verbindungen mit mindestens zwei aktiven Wasserstoffatomen.

Zur Durchführung des erfindungsgemäßen Verfahrens können weitere Einsatzstoffe, insbesondere Katalysatoren, Treibmittel sowie Hilfs- und/oder Zusatzstoffe mitverwendet werden, zu denen im einzelnen folgendes zu sagen ist:

Als Katalysatoren für die Herstellung der erfindungsgemäßen Polyurethan-Schaumstoffe werden die üblichen und bekannten Polyurethanbildungskatalysatoren eingesetzt, beispielsweise organische Zinnverbindungen, wie Zinndiacetat, Zinndioctoat, Dialkylzinndilaurat, und/oder stark basische Amine wie Triethylamin, Pentamethyldiethylentriamin, Tetramethyldiaminoethylether, Imidazole oder vorzugsweise Triethylendiamin. Die Katalysatoren werden vorzugsweise in einer Menge von 0,01 bis 5 Gew.-%, vorzugsweise 0,05 bis 2 Gew.-%, eingesetzt.

Als Treibmittel zur Herstellung der Polyurethan-Schaumstoffe wird bevorzugt Wasser eingesetzt, das mit den Isocyanatgruppen unter Freisetzung von Kohlendioxid reagiert. Gemeinsam mit oder an Stelle von Wasser können auch physikalisch wirkende Treibmittel, beispielsweise Kohlendioxid, Kohlenwassserstoffe, wie n-, iso- oder Cyclopentan, Cyclohexan oder halogenierte Kohlenwasserstoffe, wie Tetrafluorethan, Pentafluorpropan, Heptafluorpropan, Pentafluorbutan, Hexafluorbutan oder Dichlormonofluorethan, eingesetzt werden. Die Menge des physikalischen Treibmittels liegt dabei vorzugsweise im Bereich zwischen 1 und 20 Gew.-%, insbesondere 5 und 20 Gew.-%, die Menge an Wasser vorzugsweise im Bereich zwischen 0,5 und 10 Gew.-%, insbesondere 1 und 5 Gew.-%. Bevorzugt wird Kohlendioxid eingesetzt, das entweder online, das heißt direkt am Mischkopf, oder über den Vorratstank bei Batch Fahrweise zugeführt wird.

Als Hilfsmittel und/oder Zusatzstoffe werden beispielsweise oberflächenaktive Substanzen, Schaumstabilisatoren, Zellregler, äußere und innere Trennmittel, Füllstoffe, Pigmente, Hydrolyseschutzmittel sowie fungistatisch und bakteristatisch wirkende Substanzen eingesetzt.

Bei der technischen Herstellung von Polyurethan-Schaumstoffen ist es üblich, die Verbindungen mit mindestens zwei aktiven Wasserstoffatomen und die weiteren Einsatzstoffe sowie Hilfs- und/oder Zusatzstoffe vor der Umsetzung zu einer sogenannten Polyolkomponente zu vereinigen.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993.

Zur Herstellung der erfindungsgemäßen Polyurethane werden die organischen Polyisocyanate mit den Verbindungen mit mindestens zwei aktiven Wasserstoffatomen im Beisein der genannten Treibmittel, Katalysatoren und Hilfs- und/oder Zusatzstoffe (Polyolkomponente) zur Reaktion gebracht.

Bei der Herstellung der erfindungsgemäßen Polyurethane werden Isocyanat- und Polyolkomponente in einer solchen Menge zusammengebracht, dass das Gewichtsverhältnis von Isocyanatkomponente zur Polyolkomponente ohne Berücksichtigung des Treibmittels bei einem Index von 100 bei 0,7 : 1 bis 2,5 : 1, vorzugsweise 0,8 : 1 bis 2,2 :1 liegt.

Die Herstellung der Polyurethan-Schaumstoffe erfolgt vorzugsweise nach dem oneshot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu arbeiten, bei dem, wie oben ausgeführt, eine Polyol- und eine Isocyanatkomponente hergestellt und verschäumt werden. Die Komponenten werden vorzugsweise bei einer Temperatur im Bereich zwischen 15 bis 120°C, vorzugsweise 20 bis 80°C vermischt und in das Formwerkzeug beziehungsweise auf die Bandstraße gebracht. Die Temperatur im Formwerkzeug liegt zumeist im Bereich zwischen 15 und 120°C, vorzugsweise zwischen 30 und 80°C.

Die erfindungsgemäßen Weichschäume weisen eine hohe Offenzelligkeit auf, wobei auf das Walken praktisch verzichtet werden kann. Weiterhin haben sie einen angenehmen, latexähnlich Griff. Bei der Herstellung der Weichschäume in Formen haben sie schnelle Entformzeiten, vorzugsweise von 2 Minuten und weniger.

Die Erfindung soll an den nachstehenden Beispielen näher beschrieben werden.

### Beispiel A

### Herstellung des Prepolymeren

2186 g 4,4'MDI wurden als Schuppen in einem Prepolymerreaktor eingebracht und bei 60°C aufgeschmolzen. In die Schmelze von 60°C wurden in einer Zeit von 15 Minuten 3123 g eines Polyetheralkohols mit einer Hydroxylzahl von 35 mgKOH/g, hergestellt durch Anlagerung von Propylenoxid und nachfolgend von Ethylenoxid an Glyzerin, zugegeben, wobei die ersten 10 Gew.-% des Polyols eine solche Menge an DIBIS (Bischlorkohlensäuredipropylenglykol) enthielten, dass nach vollständiger Zugabe des Polyols eine Konzentration des DIBIS im Prepolymeren von 0,006 Gew.-% eingestellt war. Nach vollständiger Zugabe des Polyols wurde mindestens für 15 min gerührt, bis die Temperatur wieder 60°C betrug. Danach wurde die Reaktionsmischung auf 80°C erwärmt und bei dieser Temperatur für 2 Stunden unter Rühren reagieren gelassen. Nach beendeter Reaktion ließ man die Mischung abkühlen und bestimmte den NCO-Gehalt. Das so erhaltene Prepolymer wies einen NCO-Gehalt von 12 Gew.-% auf. Zu diesem Prepolymer wurden 937 g Polyisocyanat Lupranat® M20W zugegeben, wobei der NCO-Gehalt der Mischung auf 15 Gew.-% anstieg.

### Beispiele 1 bis 5

### Herstellung der Schaumstoffe

Die Verschäumung erfolgte in einem Hochdruckpuromaten. Bei 150 bar wurden die Polyol- und die Isocyanatkomponente in einem Mischkopf aufeinandergeschossen und über einen statischen Mischer homogenisiert. Das Reaktionsgemisch wurde in eine offene Aluminiumform eingebracht, die auf 40°C beheizt war. Nach Eintrag des Gemisches wurde die Form geschlossen und bis zur ausreichenden Aushärtung geschlossen gehalten. Eine ausreichende Aushärtung lag dann vor, wenn das zu entformende Kissen bei der Entformung durch die dabei auftretende mechanische Belastung keine oder zumindest nur eine geringe dauerhafte Verformung, beispielsweise durch Fingerprint, aufwies.

Die Mengen an Einsatzstoffen und die mechanischen Kennwerte der erhaltenen Schaumstoffe sind in Tabelle 1 festgehalten

**Tabelle 1**

| Beispiel | 1 | 2 | 3 | 4 | 5 |
|---|---|---|---|---|---|
| *A-Komponente:* | Gew.-% | Gew.-% | Gew.-% | Gew.-% | Gew.-% |
| Lupranol® 2095 | 58,71 | 58,71 | 58,71 | 50,86 | 55,82 |
| Lupranol® 2047 | 4,98 | 4,98 | 4,98 | 5,76 | 5,33 |
| Lupranol® 4800 | 24,88 | 24,88 | 24,88 | 29,37 | 26,40 |
| Lupragen® N 201 | 2,49 | 2,49 | 2,49 | 2,88 | 2,66 |
| Dabco® 8154 | 2,49 | 2,49 | 2,49 | 2,88 | 2,66 |
| L 3002 | 1,66 | 1,66 | 1,66 | 1,92 | 1,78 |
| Triethanolamin | 1,33 | 1,33 | 1,33 | 1,53 | 1,42 |
| Wasser | 3,48 | 3,48 | 3,48 | 4,78 | 3,90 |
| Methylenchlorid | 6,94 | 18,84 | 18,84 | 18,70 | 18,77 |
| | | | | | |
| Wasser in 100 g System [g] | 1,44 | 1,44 | 1,44 | 1,68 | 1,53 |
| | | | | | |

| *B-Komponente*: | | | | | |
|---|---|---|---|---|---|
| Prepolymer nach Beispiel 1 | | | | | |
| | | | | | |
| Index: | 100 | 100 | 100 | 100 | 100 |
| | | | | | |
| MV 100: | 142 | 142 | 142 | 185 | 156,4 |
| MV 100: ( OH / NCO) | 41,5 | 41,5 | 41,5 | 48,3 | 44,1 |
| MV 100: (m-Methylenchlorid) | 132 | 115 | 115 | 150 | 127 |
| | | | | | |
| Formtemperatur [°C] | 40 | 40 | 40 | 40 | 40 |
| | | | | | |

| *Mechanik* | | | | | |
|---|---|---|---|---|---|
| | | | | | |
| Raumgewicht | 60,6 | 48,9 | 48,0 | 48,1 | 48,1 |
| Stabw. | 1,2 | 0,6 | 0,1 | 0,4 | 0,4 |
| Eindruckhärte 40% | 425 | 253 | 257 | 369 | 301 |
| Stabw. | 0 | 0 | 0 | 0 | 0 |
| STH 40 % | 8,2 | 4,8 | 4,5 | 6,8 | 5,4 |
| Stabw. | 0,7 | 0,2 | 0,2 | 0,2 | 0,1 |
| Hysterese | 23,9 | 23,9 | 24,2 | 29,3 | 26,9 |
| Stabw. | 0,4 | 0,2 | 0,1 | 0,5 | 0,3 |
| DVR | 4,8 | 5,4 | 4,7 | 6,3 | 6,1 |
| Stabw. | 0,2 | 0,2 | 0,4 | 0,4 | 0,5 |
| DVR (40°C/94° Feuchte) | | | | | |
| | | | | | |
| Wet-Compression-Set | 7,7 | 7,7 | 7,4 | 10,1 | 9,4 |
| Stabw. | 0,5 | 0,5 | 0,6 | 0,8 | 0 |
| Zugfestigkeit | 178 | 122 | 131 | 172 | 131 |
| Stabw. | 22 | 17 | 9 | 15 | 22 |
| Bruchdehnung | 110 | 119 | 125 | 125 | 115 |
| Stabw. | 10 | 9 | 6 | 5 | 11 |
| RPE | 59 | 57 | 57 | 56 | 57 |
| Stabw. | 1 | 0 | 0 | 0 | 0 |
| Weiterreißwiderstand | 0,50 | 0,42 | 0,45 | 0,60 | 0,50 |
| Stabw. | 0,05 | 0,05 | 0,04 | 0,03 | 0,05 |
| | | | | | |
| Eindruckhärte v.DSV | 433,2 | | | 383,2 | 300,2 |
| Eindruckhärten.DSV | 401,34 | | | 330,50 | 250,87 |
| Härteverlust | 7,4 | | | 13,7 | 16,4 |
| | Handkissen | Handkissen | | Handkissen | Handkissen |
| Entformzeit | 1,5 | 1,5 | | 1,5 | 1,5 |
| | | | | | |
| Formtemperatur | 40 | 40 | | 40 | 40 |
| | | | | | |
| Offenzelligkeit 1 | 482,90 | 265,06 | | 395,14 | 311,74 |
| Offenzelligkeit 2 | 459,16 | 279,94 | | 414,24 | 327,80 |
| Offenzelligkeit 3 | 468,38 | 290,56 | | 428,82 | 339,78 |
| Differenz 1-3 | 14,52 | -25,50 | | -33,68 | -28,04 |
| | | | | | |
| | | ein Hand- | | | |
| | | kissen nach | | | |
| | | 1 min entformt | | | |
| | | leichter Finger- | | | |
| | | print durch | | | |
| | | Entformung | | | |
| Lupranol® 2095 - dreifunktioneller, mit Glyzerin gestarteter Polyetheralkohol, Hydroxyl-zahl 35 mgKOH/g, Propylenoxid und 13,3 Gew.-% endständiges Ethylenoxid in der Kette | | | | | |
| Lupranol® 2047 - dreifunktioneller, mit Glyzerin gestarteter Polyetheralkohol, Hydroxyl-zahl 38 mgKOH/g, Ethylenoxid und Propylenoxid mit 10 Gew.-% endständigem Ethylenoxid in der Kette | | | | | |
| Lupranol® 4800 - Polymerpolyol mit einer Hydroxylzahl von 20 mgKOH/g mit einem Feststoffgehalt durch Polymerisation von Styrol und Acrylnitril von 43,5 Gew.-%, | | | | | |
| Dabco® 8154 - Aminkatalysator | | | | | |

In der Tabelle erkennt man, dass mit hohen Gehalten an 4,4'-MDI Schäume hergestellt werden können, die bei Dichten im Bereich von 50 g/L Eindruckhärten von ca. 250 bis 300N aufweisen (Beispiele 2, 3 und 5). Dies wird erreicht, indem man bei geringen Wassergehalten arbeitet und durch externe Treibmittel eine Dichterhöhung vermeidet. Kleine Veränderungen des Wassergehaltes ziehen bei gleichbleibendem Index schnell Veränderungen in der Eindruck- bzw. Stauchhärte nach sich (Versuche 3, 5 und 4). Die mechanischen Eigenschaften entsprechen weitgehend denen vergleichbarer Schäume ohne externe Treibmittel, die auf Basis Isocyanatkomponenten mit geringerem Gehalt an 4,4'-MDI hergestellt wurden. Die Offenzelligkeit und die Entformzeit sind überdurchschnittlich gut. So findet man bei den geringeren Dichten eine Zunahme der Eindruckhärten, während der Eindruckhärteprüfung, was auf hervorragende Offenzelligkeit hinweist. Solche Schäume müssen nicht mehr gewalkt werden. Weiterhin kann die Entformung schon 90 Sekunden nach Eintrag des Reaktionsgemisches in die Form vorgenommen werden.

Die Prüfungen der Schaumstoffe wurden nach den in Tabelle 2 aufgelisteten Methoden durchgeführt

**Tabelle 2**

| Mechanische Prüfung | Prüfnorm |
|---|---|
| Zugfestigkeit, Bruchdehnung | DIN EN ISO 1798 |
| STH 40 % Hysterese | DIN EN ISO 3386 |
| RPE | DIN 53573 |
| DVR | DIN EN ISO 1856 |
| Wet-Compression-Set | Renault 1637 mod2 |
| Weiterreißwiderstand | DIN 53515 |
| DSV | DIN EN ISO 3385 |

## Patentansprüche

1. Verfahren zur Herstellung von Polyurethan-Weichschaumstoffen mit einer Dichte im Bereich zwischen 30 bis 80 g/L durch Umsetzung von
a) Polyisocyanaten mit
b) Verbindungen mit mindestens zwei mit Isocyanatgruppen reaktiven Wasserstoffatomen in Gegenwart von
c) Treibmitteln,
**dadurch gekennzeichnet, dass** als Polyisocyanate a) Prepolymere mit einem NCO-Gehalt von maximal 17,5 Gew.-% eingesetzt werden, deren Herstellung die Schritte
i) Umsetzung von 4,4'-MDI mit mindestens einem Polyetheralkohol mit einer Hydroxylzahl im Bereich zwischen 20 und 60 mgKOH/g und einem Anteil von Ethylenoxideinheiten in der Polyetherkette von 10 bis 20 Gew.-%, bezogen auf das Gewicht der eingesetzten Alkylenoxide zu einem Prepolymeren mit einem NCO-Gehalt im Bereich zwischen 10 und 14 Gew.-%,
ii) Mischung des Prepolymeren aus Schritt i) mit Polyphenylen-polymethylen-polyisocyanaten,
umfasst.

2. Verfahren nach Anspruch 1, **dadurch gekennzeichnet, dass** das Prepolymere einen NCO-Gehalt von maximal 15 Gew.-% aufweist.

3. Verfahren nach Anspruch 1, **dadurch gekennzeichnet, dass** der zur Herstellung des Prepolymeren eingesetzte Polyetheralkohol zwei- bis dreifunktionell ist und eine Hydroxylzahl im Bereich zwischen 25 und 100 mgKOH/g aufweist.

4. Verfahren nach Anspruch 1, **dadurch gekennzeichnet, dass** das in Schritt ii) eingesetzte Polyphenylen-polymethylen-polyisocyanat einen NCO-Gehalt im Bereich zwischen und 30,5 Gew.-% und 32,0 Gew.-% aufweist.

5. Verfahren nach Anspruch 1, **dadurch gekennzeichnet, dass** als Verbindung mit mindestens zwei aktiven Wasserstoffatomen b) Polyesteralkohole und/oder Polyetheralkohole mit einer Funktionalität von 2 bis 8 und einem mittleren Eqivalentmolekulargewicht im Bereich von 400 bis 3000 g/mol, vorzugsweise 1000 bis 2500 g/mol eingesetzt werden.

6. Polyurethan-Weichschaumstoffe mit einer Dichte im Bereich zwischen 30 bis 80 g/l, herstellbar nach einem der Ansprüche 1 bis 6.
